# EUROPÄISCHE PATENTSCHRIFT

(11) **EP 2 804 028 B1**
(45) Veröffentlichungstag und Bekanntmachung des Hinweises auf die Patenterteilung: **10.04.2019**
(21) Anmeldenummer: 14167710.4
(22) Anmeldetag: 09.05.2014
(51) Int. Cl.: G02B 3/00, G02B 23/24, G02B 7/02

(54) **Umkehrsystem, Endoskop sowie Verfahren zum Montieren eines optischen Systems eines Endoskops**
Inversion system, endoscope and method for mounting an optical system of an endoscope
Système d'inversion, endoscope et procédé de montage d'un système optique d'un endoscope

(30) Priorität: 17.05.2013 DE 102013105085
(43) Veröffentlichungstag der Anmeldung: 19.11.2014
(73) Patentinhaber: Karl Storz SE & Co. KG, 78532 Tuttlingen (DE)
(72) Erfinder: Vogel, Dr. Walter, 78532 Tuttlingen (DE)

(56) Entgegenhaltungen:
- EP-A2- 2 362 529
- DE-A1- 19 742 454
- DE-U1- 20 201 890

## Beschreibung

Die vorliegende Erfindung betrifft ein Umkehrsystem für ein starres Endoskop umfassend zwei Stablinsen, sowie ein Endoskop und ein Verfahren zum Montieren eines optischen Systems eines Endoskops.

Endoskope dienen zur Betrachtung von Hohlräumen im menschlichen oder tierischen Körper sowie in technischen Gegenständen und können starr, halbstarr oder flexibel ausgebildet sein. Ein starres Endoskop umfasst einen lang erstreckten Endoskopschaft, der zur Einführung in einen zu betrachtenden Hohlraum geeignet ist, sowie einen Kopf, der Anschlüsse und Bedienelemente sowie einen Okulareinblick aufweisen kann. Innerhalb des Endoskopschafts und des Kopfs ist ein optisches System zur Weiterleitung eines endoskopischen Bildes vom distalen, d.h. beobachterfernen, Ende des Endoskops zum proximalen, d.h. beobachternahen, Ende angeordnet. Das optische System umfasst hierfür insbesondere ein distal angeordnetes Objektiv zur Aufnahme des endoskopischen Bilds, einen Bildweiterleiter und ein am proximalen Ende des Endoskops angeordnetes Okular mit einem Okulareinblick zur visuellen Betrachtung des weitergeleiteten endoskopischen Bildes. Der Bildweiterleiter eines starren Endoskops ist in der Regel als Stablinsenanordnung mit entlang einer optischen Achse angeordneten Stablinsen und ggf. weiteren Linsen ausgebildet. Ferner kann das Endoskop zur Beleuchtung des zu beobachtenden Hohlraums Beleuchtungslichtleiter aufweisen sowie ggf. weitere Vorrichtungen, wie etwa Kanäle für endoskopische Arbeitsinstrumente.

Zwischen den Linsen des optischen Systems sind in der Regel Abstandshalter angeordnet, die beispielsweise als kurze zylindrische Rohrstücke ausgebildet sind und die einen direkten Kontakt zwischen benachbarten Linsen verhindern und diese in einem Abstand zueinander halten. Üblicherweise sind die Stablinsen und die Abstandshalter sowie ggf. weitere optische Elemente der Stablinsenanordnung in einem Optikrohr des Endoskops aufgenommen und sind in diesem aufgrund eines gegenüber dem Innendurchmesser des Optikrohrs geringfügig geringeren Außendurchmesser frei verschiebbar. Durch eine Systemfeder und eine Systemabschlussführung werden die optischen Elemente in distaler Richtung gegen einen distalen Abschluss des Optikrohrs, der beispielsweise durch ein Deckglas gegeben sein kann, vorgespannt. Hierdurch werden die Linsen in Längsrichtung an ihrer aufgrund der Berechnung des optischen Systems vorbestimmten jeweiligen Position sowie durch die Abstandshalter in Abstand zueinander gehalten.

Endoskope sind bei ihrer Benutzung erheblichen mechanischen und thermischen Belastungen ausgesetzt. So können bei der Handhabung Beschleunigungen bzw. Erschütterungen oder Stöße auf das Endoskop einwirken, die zu Bewegungen und dynamischen Belastungen der Linsen und der anderen optischen Bauelemente führen können. Besonders problematisch sind dabei die Berührungsbereiche zwischen den Abstandshaltern und den Stablinsen, da in diesen Bereichen die durch die Vorspannung auf das optische System ausgeübte Kraft sowie durch Erschütterungen oder Stöße erzeugte dynamische Kräfte übertragen werden. Die Abstandshalter sind in der Regel relativ dünnwandig ausgebildet, um eine wesentliche Verminderung des zur Bildweiterleitung nutzbaren freien Durchmessers zu vermeiden; deshalb sind die in diesen Bereichen auftretenden Flächenpressungen insbesondere bei dynamischen Beanspruchungen sehr hoch. Hierdurch kann Abrieb entstehen, der zur Erzeugung von Streulicht führen kann. Ferner können an den durch die Abstandshalter belasteten Flächen der Linsen Ausplatzungen auftreten, wodurch die Qualität des weitergeleiteten endoskopischen Bilds erheblich beeinträchtigt werden kann. Hierdurch kann ein erheblicher Reparaturaufwand entstehen.

Zur Verringerung der Gefahr einer Beschädigung der durch Abstandshalter beabstandeten Linsen durch die von den Abstandshaltern auf die Linsen aufgebrachten Kräfte wird in der Gebrauchsmusterschrift DE 202 01 890 U1 vorgeschlagen, einen Abstandshalter bezüglich Form oder Materialaufbau so gestalten, dass er auf Linsen an Berührungsflächen zwischen dem Abstandshalter und einer Linse eine geringe kerbende Wirkung ausübt. Zu diesem Zweck weist der Abstandshalter an den Berührungsflächen ein Material geringer Oberflächenhärte auf oder ist elastisch ausgestaltet, um die auf die Linse ausgeübte Kraft zu limitieren.

Es ist Aufgabe der vorliegenden Erfindung, ein Umkehrsystem, ein Endoskop sowie ein Verfahren zum Montieren eines optischen Systems eines Endoskops anzugeben, wobei eine einfache und sichere Montage und eine Verringerung der Gefahr einer Beschädigung der Stablinsen bei der Montage und beim Gebrauch des Endoskops ermöglicht wird.

Diese Aufgabe wird durch ein Umkehrsystem gemäß Anspruch 1, durch ein Endoskop gemäß Anspruch 8 sowie durch ein Verfahren gemäß Anspruch 9 gelöst.

Vorteilhafte Weiterbildungen der Erfindung ergeben sich aus den Unteransprüchen.

Eine Stablinse umfasst eine stabförmige Linseneinheit, die aus einem einzigen stabförmigen Linsenelement oder aus mehreren miteinander verkitteten Linsenelementen besteht. Die stabförmige Linseneinheit weist eine Längsachse auf, wobei eine Länge der Linseneinheit in Richtung der Längsachse größer als ein quer zur Längsachse gemessener Durchmesser ist. Die optisch wirksamen Flächen der Stablinse sind die beiden Stirnflächen der Linseneinheit sowie ggf. im Inneren einer aus mehreren Linsenelementen zusammengesetzten Linseneinheit befindliche Grenzflächen zwischen mehreren Linsenelementen. Ein oder mehrere Linsenelemente können auch als Planstab ausgebildet sein. Die stabförmige Linseneinheit weist auf ihrer Außenseite eine Umfangsfläche auf. Vorzugsweise ist die Linseneinheit rotationssymmetrisch, insbesondere zumindest abschnittsweise zylindrisch ausgebildet, wobei die Längsachse die Symmetrieachse der Linseneinheit ist. Bei einer zumindest abschnittsweise zylindrisch ausgebildeten Linseneinheit ist die Umfangsfläche die zumindest abschnittsweise zylindrische Mantelfläche der Linseneinheit.

Eine erfindungsgemäße Stablinse umfasst mindestens eine in axialer Richtung magnetisierte Magnetanordnung, die auf der Umfangsfläche der Linseneinheit angeordnet ist. Die Magnetanordnung ist somit permanentmagnetisch mit in Richtung der beiden Enden der Stablinse weisenden magnetischen Polen ausgebildet. Die Magnetanordnung kann einen oder mehrere Permanentmagneten umfassen. Ferner kann die Stablinse eine oder mehrere derartige Magnetanordnungen aufweisen. Sofern eine einzige Magnetanordnung vorhanden ist, kann diese sich über einen Teilbereich der Umfangsfläche oder im Wesentlichen über die gesamte Umfangsfläche der Stablinse erstrecken. Im Rahmen der vorliegenden Anmeldung wird unter "Stablinse" die Einheit aus dem stabförmigen Linsenelement bzw. den miteinander verkitteten Linsenelementen und der Magnetanordnung verstanden. Die erfindungsgemäße Stablinse ist insbesondere zur Verwendung in einem Bildweiterleiter eines starren Endoskops geeignet.

Dadurch, dass die Stablinse mindestens eine permanentmagnetische Magnetanordnung mit parallel zur Längsachse der Stablinse gerichteter magnetischer Polung aufweist, wird es ermöglicht, die Stablinse beim Einschieben in ein Optikrohr, beispielsweise ein Optikrohr eines Endoskops, mit einem entsprechend gegenpolig gerichteten Magneten berührungslos in eine gewünschte Position zu schieben. Ferner wird es hierdurch ermöglicht, ein Linsensystem mit mehreren aufeinander folgenden Stablinsen aufzubauen, bei dem zumindest ein Teil einer in Längsrichtung wirkenden Druckkraft durch eine magnetische Abstoßungskraft zwischen zwei aneinander angrenzenden Stablinsen aufgefangen wird. Hierdurch kann es insbesondere ermöglicht werden, eine in einem Optikrohr verschiebbar aufgenommene Linsenanordnung mit einander mit ihren Stirnflächen benachbarten Stablinsen zu schaffen, wobei zwischen den Stirnflächen der Stablinsen ein Abstand verbleibt, ohne dass hierfür mechanische Abstandshalter, die die Stablinsen berühren und mechanisch in Abstand zueinander halten, benötigt werden. Dadurch, dass kein mechanischer Abstandshalter benötigt wird, kann eine Einschränkung des für die Weiterleitung des endoskopischen Bilds verfügbaren Querschnitts der Linsenelemente der Stablinse vermieden werden. Ferner kann die Montage eines aus mehreren hintereinander angeordneten Stablinsen bestehenden Linsensystems dadurch vereinfacht und sicherer gestaltet werden, dass die Stablinse mit der mindestens einen Magnetanordnung als vormontierte Baugruppe ausgebildet werden kann, so dass eine verringerte Anzahl von Bauteilen bei der Montage gehandhabt werden müssen.

Die Magnetanordnung ist fest mit der durch ein Linsenelement bzw. mehrere miteinander verkittete Linsenelemente gebildeten stabförmigen Linseneinheit der Stablinse verbunden, vorzugsweise ist die mindestens eine Magnetanordnung auf die Umfangsfläche der Linseneinheit aufgeklebt. Hierfür kann eine Innenfläche der Magnetanordnung zylindrisch oder teilzylindrisch mit einem Innendurchmesser ausgebildet sein, der geringfügig größer als ein Außendurchmesser eines zylindrischen Bereichs der Mantel- bzw. Umfangsfläche der Linseneinheit ist, auf die die Magnetanordnung aufgeklebt wird, so dass zwischen der Innenseite der Magnetanordnung und der Außenseite der Linseneinheit ein Klebespalt verbleibt, der zum Fixieren der Magnetanordnung an der Linseneinheit zumindest teilweise mit Klebstoff gefüllt wird. Hierdurch kann auf einfache und sichere Weise eine Fixierung der Magnetanordnung auf der Umfangsfläche erreicht werden.

Gemäß einer bevorzugten Ausführungsform der Erfindung nimmt die Magnetanordnung nur einen Teilbereich der Umfangsfläche der stabförmigen Linseneinheit ein und ist in einem Endabschnitt der Linseneinheit angeordnet. Hierdurch wird aufgrund der Nähe der Magnetanordnung zum betreffenden Ende der Stablinse eine besonders wirksame Erzeugung einer magnetischen Abstoßungskraft zu einer benachbarten Stablinse mit einer entgegengesetzten Polung ermöglicht. Ferner kann die Magnetanordnung in diesem Fall gleichzeitig zur Führung der Stablinse in einem Optikrohr eines Endoskops dienen, wobei ein mittlerer Bereich der Stablinse nicht in Berührung zum Optikrohr steht und die Stablinse deshalb bei Biegungen des Optikrohrs, die beim Betrieb des Endoskops auftreten können, keinem Biegemoment ausgesetzt wird.

Vorzugsweise wird die Magnetanordnung durch einen ringförmig ausgebildeten Magneten gebildet. Dieser ist insbesondere zylindrisch ausgebildet mit einem Innendurchmesser, der geringfügig größer ist als der Außendurchmesser der stabförmigen Linseneinheit im betreffenden Endabschnitt, so dass ein Klebespalt verbleibt, der zum Fixieren der Magnetanordnung auf der Stablinse mit Klebstoff gefüllt ist. Hierdurch wird eine Stablinse mit einer besonders wirksamen und leicht zu montierenden Magnetanordnung geschaffen.

Gemäß einer weiteren bevorzugten Ausführungsform der Erfindung ist die mindestens eine Magnetanordnung in einem vom Ende der Linseneinheit beabstandeten, gegenüber dem Endabschnitt der Linseneinheit verjüngten Bereich angeordnet. Insbesondere können die Magnetanordnung und die Verjüngung der Linseneinheit der Stablinse derart ausgebildet sein, dass der Außendurchmesser der Magnetanordnung kleiner oder gleich dem Außendurchmesser der Linseneinheit in ihrem Endabschnitt ist. Hierdurch wird es ermöglicht, eine Stablinse mit einer auf ihrer Umfangsfläche angeordneten Magnetanordnung zu schaffen, deren Außendurchmesser nicht größer als der einer Stablinse ohne eine solche Magnetanordnung ist. Da aufgrund des in einem Bildweiterleiter eines Endoskops realisierten Strahlengangs die radial äußeren Randbereiche der Linsenelemente der Stablinse nur in den Endabschnitten der Linseneinheit überhaupt zur Bildübertragung genutzt werden, ist hierbei eine Ausgestaltung möglich, bei der die zur Bildübertragung benötigte Querschnittsfläche der Stablinse nicht eingeschränkt und der in einem Optikrohr des Endoskops in radialer Richtung verfügbare Bauraum optimal ausgenutzt wird.

Vorzugsweise wird die Magnetanordnung durch eine Mehrzahl von Segmenten gebildet, die jeweils an die beispielsweise zylindrische Mantelfläche der Linseneinheit der Stablinse angepasst sind. In besonders vorteilhafter Weise wird eine Magnetanordnung, die auf einem vom Ende der Linseneinheit beabstandeten, gegenüber dem Endabschnitt der Linseneinheit verjüngten Bereich angeordnet ist, durch eine solche Mehrzahl von Segmenten gebildet. Hierdurch wird eine problemlose Anbringung der Magnetanordnung, insbesondere auf dem verjüngten Bereich der Linseneinheit, ermöglicht, indem die Segmente einzeln aufgebracht und mit der Umfangsfläche der Linseneinheit verklebt werden.

Gemäß einer besonders bevorzugten Ausführungsform der Erfindung weist die Stablinse zwei voneinander beabstandete Magnetanordnungen auf, die jeweils in einem Endabschnitt oder benachbart zu einem Endabschnitt der Stablinse angeordnet sind. Die beiden Magnetanordnungen sind somit insbesondere auf den jeweiligen Endabschnitten der Linseneinheit oder jeweils auf einem verjüngten Bereich der Linseneinheit, der dem betreffenden Endabschnitt benachbart ist, angeordnet. Den beiden Enden der Stab linse ist somit jeweils eine Magnetanordnung zugeordnet. Die Magnetanordnungen, die jeweils in axialer Richtung permanent magnetisiert sind, können dabei gleich oder entgegengesetzt gerichtet gepolt sein. Hierdurch wird eine Stablinse geschaffen, die den Aufbau eines mehr als zwei aneinander angrenzend gelagerte Stablinsen umfassenden, in einem Optikrohr verschiebbar aufgenommenen Linsensystems ermöglichen, bei dem zumindest ein Teil einer axial wirkenden Druckkraft durch zwischen den aneinander angrenzenden Stablinsen wirkende magnetische Abstoßungskräfte aufgenommen wird oder diese sogar ohne Einsatz von mechanischen Abstandshaltern in Abstand zueinander gehalten werden können. Ferner kann hierdurch die Montage der Linsenanordnung vereinfacht werden, da keine mechanischen Abstandshalter benötigt werden.

Die Erfindung betrifft auch ein Relaislinsensystem, das zur Abbildung eines Zwischenbilds in ein nachfolgendes Zwischenbild im Bildweiterleiter eines starren Endoskops dient. Da das nachfolgende Zwischenbild gegenüber dem vorhergehenden umgekehrt ist, wird ein solches Relaislinsensystem auch als Umkehrsystem bezeichnet. Ein erfindungsgemäßes Umkehrsystem umfasst mindestens zwei Stablinsen, die zumindest an den aneinander angrenzenden Enden wie oben beschrieben jeweils mit einer Magnetanordnung versehen sind, wobei sich gleiche Pole gegenüberstehen. In bevorzugter Weise weisen alle Stablinsen des Umkehrsystems an ihren beiden Enden jeweils eine Magnetanordnung auf. Hierdurch wird es ermöglicht, einen Bildweiterleiter eines starren Endoskops aufzubauen, ohne dass mechanische Abstandshalter zwischen den Stablinsen notwendig sind. Hierdurch kann die Montage des Relaislinsensystems vereinfacht und beispielsweise eine Vignettierung des endoskopischen Bilds vermieden werden.

Ein erfindungsgemäßes Endoskop, das insbesondere als starres Endoskop ausgebildet ist, weist eine lineare Linsenanordnung auf, die entlang einer optischen Achse aus im Strahlengang aufeinander folgenden Linsen aufgebaut ist. Die Linsenanordnung ist im Inneren des Endoskops, insbesondere zumindest teilweise in einem Optikrohr des Endoskops angeordnet und vorzugsweise als Bildweiterleiter zur Weiterleitung eines aufgenommenen endoskopischen Bilds von einem distalen zu einem proximalen Ende des Endoskops ausgebildet. Das Optikrohr ist innerhalb eines lang erstreckten Schafts des Endoskops angeordnet und kann in einen Kopf des Endoskops hineinreichen. Das Optikrohr kann beispielsweise als Innenrohr einer Endoskopoptik, die hier ebenfalls als Endoskop bezeichnet wird, oder als Systemrohr eines Endoskops, das beispielsweise Arbeitskanäle für endoskopische Instrumente oder weitere Kanäle umfassen kann, ausgebildet sein. Das Endoskop kann auch eine Beleuchtungsoptik zum Weiterleiten des von einer externen Lichtquelle erzeugten Beleuchtungslichts zum distalen Ende des Endoskops aufweisen.

Die Linsenanordnung umfasst mindestens eine erste und eine benachbart, d.h. entlang der optischen Achse des Endoskops im Strahlengang unmittelbar nachfolgend oder vorhergehend zur ersten Stablinse angeordnete zweite Stablinse. Erfindungsgemäß sind die erste und die zweite Stablinse wie oben beschrieben ausgebildet und sind derart angeordnet, dass sie mit gleichen magnetischen Polen einander zugewandt sind, so dass zwischen den beiden Stablinsen eine magnetische Abstoßungskraft wirkt. Insbesondere weisen die erste und die zweite Stablinse in den einander zugewandten Endbereichen oder in zu den Endbereichen benachbarten verjüngten Bereichen der jeweiligen Linseneinheit jeweils eine axial magnetisierte Magnetanordnung auf, wobei die Magnetanordnung der zweiten Stablinse entgegengesetzt zu der der ersten Stablinse magnetisiert ist. Hierdurch wird es ermöglicht, dass zumindest ein Teil einer zwischen der ersten und der zweiten Stablinse wirkenden Druckkraft von der magnetischen Abstoßungskraft aufgenommen wird und eine Kraft, mit der die erste an der zweiten Stablinse direkt oder über einen Abstandshalter anliegt, vermindert ist und dadurch die Gefahr einer Beschädigung der Stablinsen verringert ist.

Gemäß einer bevorzugten Ausführungsform der Erfindung sind die erste und die zweite Stablinse durch eine auf die Stablinsen wirkende Druckkraft zueinander vorgespannt. Die Druckkraft kann beispielsweise durch eine proximalseitig angeordnete Systemfeder erzeugt werden, die die linear aufeinander folgenden optischen Bauelemente des optischen Systems gegen einen distalen Abschluss des optischen Systems vorspannt. Insbesondere können die optischen Bauelemente in einem Optikrohr geführt sein. Die Druckkraft und die durch die einander mit gleichen Polen zugewandten Magnetanordnungen der ersten und der zweiten Stablinse erzeugte magnetische Abstoßungskraft sind derart eingestellt, dass die erste und die zweite Stablinse in einem Abstand voneinander gehalten sind. Hierbei kann ausgenutzt werden, dass die Abstoßungskraft mit zunehmendem Abstand zwischen den Magnetanordnungen bzw. zwischen den Stablinsen rasch abnimmt, während die durch die Systemfeder erzeugte Druckkraft mit diesem Abstand allmählich zunimmt. Zwischen beiden Kräften kann somit ein Gleichgewichtspunkt gewählt werden, der dem gewünschten Abstand zwischen den Stirnflächen der Stablinsen entspricht. Hierdurch wird es ermöglicht, die Stablinsen ohne Berührung ihrer Stirnflächen in einem Abstand voneinander zu halten, ohne dass mechanische Abstandshalter notwendig sind. Der Abstand bzw. der Luftspalt zwischen den Linseneinheiten der ersten und der zweiten Stablinse kann sehr gering sein, um lediglich eine direkte Berührung der Stirnflächen der beiden Stablinsen zu vermeiden. Dadurch, dass keine mechanische Berührung der Stirnflächen untereinander sowie mit einem Abstandshalter stattfindet, kann die Gefahr einer Beschädigung der Stablinsen sowie der beim Betrieb des Endoskops entstehende Verschleiß wesentlich verringert oder praktisch vollständig vermieden werden. Ferner kann die Montage des Linsensystems durch den Verzicht auf mechanische Abstandshalter vereinfacht werden, und aufgrund der Verringerung von Beschädigungen kann nicht nur der Reparaturaufwand beim Betrieb des Endoskops verringert werden, sondern auch die Wiederverwendbarkeit gebrauchter Stablinsen verbessert werden.

In besonders bevorzugter Weise bilden die erste und die zweite Stablinse ein Umkehrsystem zum Abbilden eines Zwischenbilds in ein weiteres Zwischenbild. Dabei sind die voneinander abgewandten Enden der ersten und der zweiten Stab linse nahe an dem jeweiligen Zwischenbild angeordnet, während die einander zugewandten Endbereiche der Stablinsen den Blendenteil des Umkehrsystems bilden. In diesem Bereich ist es besonders vorteilhaft, dass die Stablinsen nur einen geringen Luftabstand zwischen ihren Enden aufweisen, um Vignettierungseffekte zu vermeiden. Durch mechanische Abstandshalter würde zwangsläufig eine Vignettierung verursacht, die nur unter Inkaufnahme eines erheblichen Montageaufwands durch sehr dünne und schmale Abstandshalter minimiert werden kann. Dadurch, dass die erste und die zweite Stablinse auf Abstand gehalten werden, ohne dass ein mechanischer Abstandshalter notwendig ist, kann daher der besondere Vorteil erzielt werden, dass die einander gegenüberliegenden Stirnflächen der beiden Stablinsen des Umkehrsystems auf einfache Weise in einem Abstand zueinander gehalten werden können, ohne dass eine Vignettierung eintritt. Zwischen mehreren in der Linsenanordnung aufeinander folgenden Umkehrsystemen, d.h. im Bereich des jeweiligen Zwischenbilds, können mechanische Abstandshalter und/oder Blenden angeordnet sein.

Weiterhin ist es bevorzugt, dass die Linsenanordnung des Endoskops eine dritte Stablinse umfasst, die Teil eines weiteren Umkehrsystems ist und die angrenzend an die zweite Stablinse angeordnet ist. Dabei weist die dritte Stablinse ebenfalls eine Magnetanordnung auf, die axial magnetisiert und derart gerichtet ist, dass die dritte Stablinse und die zweite Stablinse einander mit gleichen Polen gegenüberstehen. Hierdurch kann erreicht werden, dass auch zwischen dem durch die erste und die zweite Stablinse gebildeten Umkehrsystem und einem nachfolgenden weiteren Umkehrsystem ein Abstand eingehalten werden kann, ohne dass ein Abstandshalter notwendig ist, wodurch die Gefahr einer Beschädigung einer der Stablinsen weiter verringert wird. Insbesondere können alle Stablinsen der Linsenanordnung des Endoskops in dieser Weise ausgebildet sein.

Gemäß einem erfindungsgemäßen Verfahren zum Montieren eines optischen Systems eines Endoskops, das eine lineare Linsenanordnung mit mindestens zwei aufeinander folgenden Stablinsen umfasst, wird eine erste Stablinse, die auf einer Umfangsfläche einer Linseneinheit der ersten Stablinse mindestens eine axial magnetisierte Magnetanordnung aufweist, in ein Optikrohr des Endoskops eingeschoben und dann eine zweite Stablinse, die ebenfalls auf einer Umfangsfläche einer Linseneinheit mindestens eine axial magnetisierte Magnetanordnung aufweist, derart in das Optikrohr eingeschoben, dass diese der ersten Stablinse mit gleichen Polen gegenüberliegt. Die erste und die zweite Stablinse sind dabei jeweils als vormontierte Baugruppe aus einer stabförmigen Linseneinheit, die aus einem Linsenelement oder aus mehreren miteinander verkitteten Linsenelementen besteht, und mindestens einer axial magnetisierten, auf einer Umfangsfläche der Linseneinheit fixierten, Magnetanordnung ausgebildet. Vorzugsweise bilden die erste und die zweite Stablinse ein vollständiges Umkehrsystem. Je nach Ausgestaltung der Linsenanordnung kann es vorgesehen sein, dass vor oder nach dem Einführen der beiden Stablinsen weitere optische Elemente in das Optikrohr eingeschoben werden; insbesondere können weitere Stablinsen, die in gleicher Weise wie die erste und die zweite aufgebaut und angeordnet sind und jeweils weitere Umkehrsystem bilden, eingeschoben werden.

Im nächsten Schritt werden die in das Optikrohr eingeführten Stablinsen sowie ggf. die weiteren in diesem befindlichen optischen Elemente axial auf Druck belastet, beispielsweise durch eine Systemfeder mit Hilfe einer Systemabschlussführung. Die ausgeübte Drucckraft wird so weit erhöht, dass die Stablinsen mit den Scheiteln der Linseneinheiten aneinander anliegen, d.h. die Stablinsen werden auf Stoß miteinander gebracht. Im nächsten Schritt wird die ausgeübte Druckkraft so weit verringert, etwa durch Entspannen der Systemfeder, dass die Stablinsen unter der Wirkung der von den einander entgegenstehenden Magnetanordnungen erzeugten Abstoßungskraft sich geringfügig voneinander entfernen, beispielsweise um wenige Zehntel Millimeter. Auf diese Weise entsteht ein Abstand und somit ein Luftspalt zwischen den Scheiteln der Linseneinheiten, die sich nun nicht mehr berühren. Gegebenenfalls kann unter der Wirkung der jeweiligen Magnetanordnungen kann ebenso jeweils ein Luftspalt zwischen den weiteren in das Optikrohr eingeschobenen Stablinsen entstehen. In dieser Position wird nun die Systemfeder fixiert, so dass die Stablinsen auf diese Weise jeweils auf Abstand voneinander gehalten sind. Hierdurch wird auf einfache und sichere Weise die Montage einer Linsenanordnung mit mindestens zwei Stablinsen ermöglicht, bei der die Stablinsen in einem Abstand zueinander angeordnet sind, und wobei gleichzeitig die Gefahr einer Beschädigung der Stablinsen beim Betrieb verringert ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Aspekte der Erfindung ergeben sich aus der nachfolgenden Beschreibung bevorzugter Ausführungsbeispiele und der beigefügten Zeichnung. Es zeigen:
Fig. 1 ein Umkehrsystem mit zwei gemäß einer ersten Ausführungsform der Erfindung ausbildeten Stablinsen in einem Längsschnitt;
Fig. 2 ein Umkehrsystem mit zwei Stablinsen gemäß einer zweiten Ausführungsform der Erfindung in einem Längsschnitt;
Fig. 3 eine Stablinse gemäß einer dritten Ausführungsform der Erfindung in perspektivischer Ansicht;
Fig. 4 einen Teil einer Linsenanordnung eines starren Endoskops im Längsschnitt;
Fig. 5 ein Endoskop mit erfindungsgemäßen Stablinsen in einer teilweise aufgebrochenen Seitenansicht.

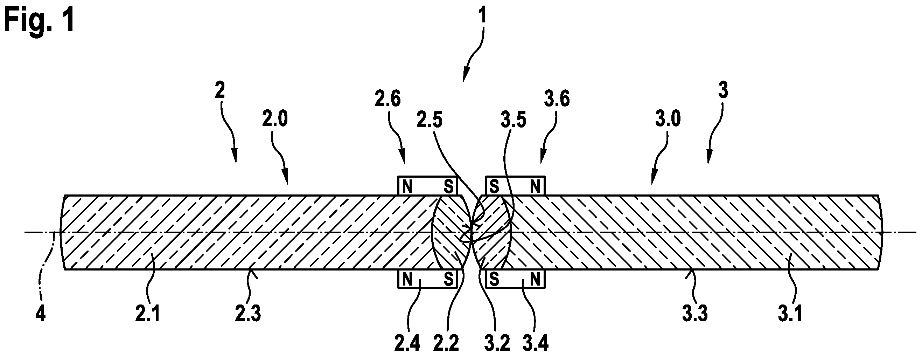

Wie in Fig. 1 dargestellt, umfasst ein Umkehrsystem 1 gemäß einem ersten Ausführungsbeispiel der Erfindung zwei symmetrisch zueinander angeordnete, aneinander angrenzende Stablinsen 2, 3. Die Stablinsen 2, 3 umfassen jeweils eine Linseneinheit 2.0, 3.0, die jeweils aus einen konvex-konkaven länglichen Stabteil 2.1, 3.1, der mit einer dünnen Linse 2.2, 3.2 verkittet ist, bestehen. Die Linseneinheiten 2.0, 3.0 sind jeweils zylindrisch abzentriert und derart angeordnet, dass ihre Symmetrieachsen mit der optischen Achse 4 des Umkehrsystems 1 zusammenfallen. Auf die zylindrischen Mantelflächen 2.3, 3.3 der Linseneinheiten 2.0, 3.0 sind jeweils in den die dünne Linse 2.2, 3.2 aufweisenden, einander zugewandten Endbereichen axial permanent magnetisierte Ringmagneten 2.4, 3.4 aufgeklebt. Die Innenseiten der Ringmagneten 2.4, 3.4 weisen hierfür einen geringfügig größeren Durchmesser auf als die Mantelflächen 2.3, 3.3, so dass ein Klebespalt zwischen dem Ringmagnet 2.4, 3.4 und der Mantelfläche 2.3, 3.3 verbleibt, der zur Fixierung der Ringmagneten 2.4, 3.4 mit Klebstoff gefüllt ist. Die Ringmagneten 2.4, 3.4 sind derart magnetisiert, dass sie sich mit gleichen Polen, in dem in Fig. 1 gezeigten Beispiel jeweils mit dem Südpol, gegenüberstehen. Insgesamt ist die Anordnung der Stablinsen 2, 3 einschließlich der Ringmagneten 2.4, 3.4 und deren Magnetisierung symmetrisch zu einer senkrecht zur optischen Achse 4 stehenden, zwischen den Stablinsen 2, 3 liegenden Mittelebene.

Durch die Anordnung der mit gleichen Polen einander gegenüberstehenden Magnetanordnungen 2.6, 3.6, die durch die Ringmagneten 2.4, 3.4 gebildet werden, entsteht eine abstoßende Kraft zwischen den Ringmagneten 2.4, 3.4 und daher auch zwischen den Stablinsen 2, 3. Diese abstoßende Kraft nimmt zumindest einen Teil einer von außen auf die Stablinsen 2, 3 ausgeübten, diese gegeneinander vorspannenden Druckkraft auf und ermöglicht bei einer entsprechenden Auslegung und Anordnung der Ringmagneten 2.4, 3.4 sowie einer entsprechenden Einstellung der äußeren Druckkraft die Einhaltung eines Abstands zwischen den einander zugewandten Stirnflächen 2.5, 3.5 der Linseneinheiten 2.0, 3.0. Zur Vermeidung einer direkten Berührung der Linseneinheiten 2.0, 3.0 an ihren Stirnflächen 2.5, 3.5 miteinander und somit zur Verringerung der Gefahr einer Beschädigung reicht ein geringer Abstand, beispielsweise von wenigen Zehntel Millimetern, zwischen den Scheiteln der Stirnflächen 2.5, 3.5 aus (in Fig. 1 nicht dargestellt). Ein mechanischer Abstandshalter zwischen den Stablinsen 2, 3 ist daher nicht notwendig.

Wenn das Umkehrsystem 1 in ein Optikrohr montiert wird, so können die Ringmagneten 2.4, 3.4 zur Führung der Stablinsen 2, 3 innerhalb des Optikrohrs dienen, wodurch gleichzeitig die mittleren Bereiche der Stablinsen 2, 3 vor einer Berührung durch das Optikrohr auch im Falle einer Biegung des Optikrohrs geschützt sind. An den anderen Enden der Stablinsen 2, 3 können in entsprechender Weise Ringmagneten oder auch andere Führungselemente angeordnet sein (in Fig. 1 nicht dargestellt).

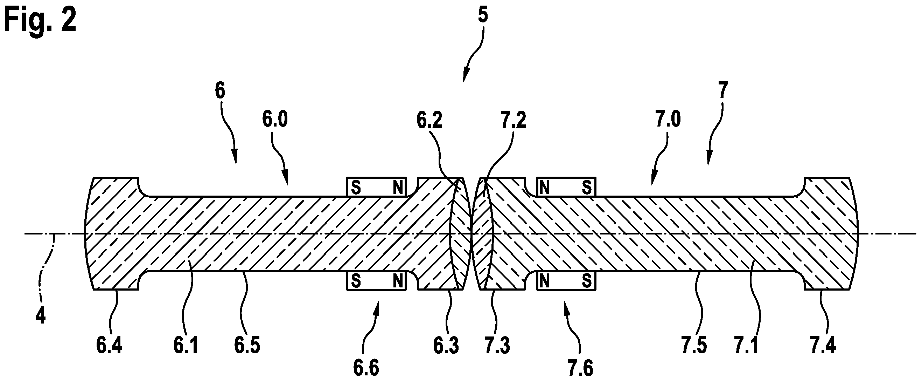

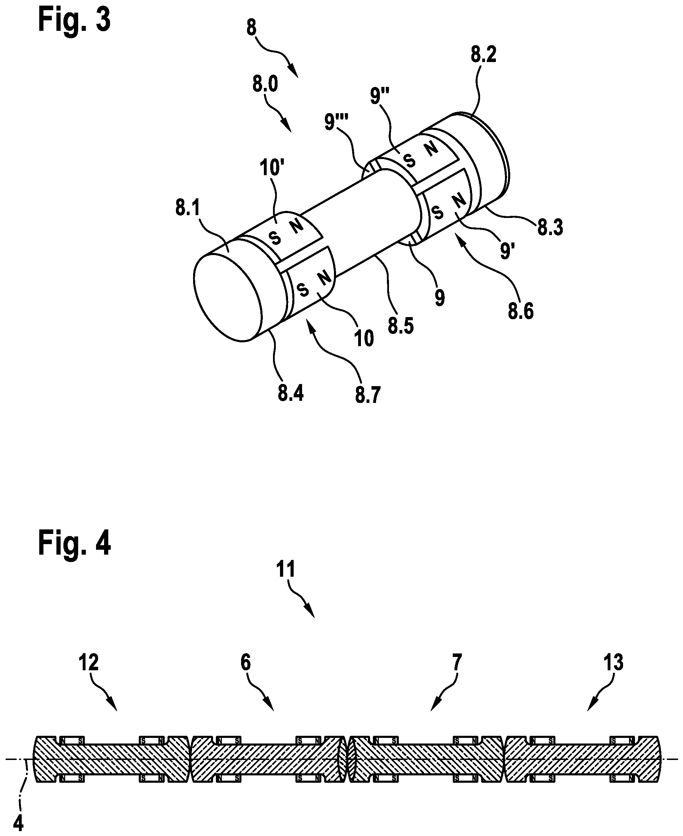

Fig. 2 zeigt ein Umkehrsystem 5 mit zwei Stablinsen 6, 7, die gemäß einer zweiten Ausführungsform der Erfindung ausgebildet sind. Die Stablinsen 6, 7 umfassen, ähnlich wie die in Fig. 1 gezeigten, jeweils eine Linseneinheit 6.0, 7.0 mit einem länglichen Stabteil 6.1, 7.1 und einer hiermit verkitteten dünnen Linse 6.2, 7.2. Die Mantelfläche der Linseneinheiten 6.0, 7.0 umfasst jeweils zwei Endbereiche 6.3, 6.4; 7.3, 7.4 und einen mittleren, gegenüber den Endbereichen 6.3, 6.4; 7.3, 7.4 im Durchmesser verjüngten Bereich 6.5, 7.5. In dem den einander zugewandten Endbereichen 6.3, 7.3 benachbarten Bereich der verjüngten Bereiche 6.5, 7.5 ist jeweils eine Magnetanordnung 6.6, 7.6 durch Kleben fixiert, wobei gleiche Pole der Magnetanordnungen 6.6, 7.6, im dargestellten Ausführungsbeispiel die Nordpole, einander zugewandt sind. Die Magnetanordnungen 6.6, 7.6 sind, wie zu Fig. 3 erläutert, segmentiert aufgebaut. Insgesamt ist das Umkehrsystem 5 symmetrisch zu einer senkrecht zur optischen Achse 4 zwischen den beiden Stablinsen stehenden Mittelebene ausgebildet. Wie zu Fig. 1 erläutert, können die Stablinsen 6, 7 ohne mechanische Abstandshalter in einem Abstand zueinander gehalten werden.

Wie in Fig. 2 erkennbar ist, wird aufgrund der Aufbringung der Magnetanordnungen in den verjüngten Bereichen 6.5, 7.5 der Maximaldurchmesser der Stablinsen 6, 7 nicht vergrößert, so dass eine optimale Ausnutzung des innerhalb eines Endoskops bzw. innerhalb des Optikrohrs eines Endoskops verfügbaren Bauraums möglich ist. Dabei tritt bei der in Fig. 2 gezeigten Knochenform der Stablinsen 6, 7 ebenfalls keine Verringerung des zur Bildübertragung nutzbaren Durchmessers auf, da dieser aufgrund des Strahlengangs in einem Bildweiterleiter eines starren Endoskops in den verjüngten Bereichen 6.5, 7.5 nicht vollständig ausgenutzt wird. In den den äußeren Endbereichen 6.4, 7.4 benachbarten Bereichen der verjüngten Bereiche 6.5, 7.5 der Mantelflächen der Linseneinheiten 6.0, 7.0 können ebenfalls in entsprechender Weise Magnetanordnungen aufgebracht sein (in Fig. 2 nicht dargestellt).

Wie in Fig. 3 in einer perspektivischen Darstellung gezeigt, besteht bei einer Stablinse 8 die Magnetanordnung 8.6 aus einer Mehrzahl von Segmenten 9, 9', 9", 9"', die benachbart zum einen Endbereich 8.3 entlang des Umfangs verteilt auf den verjüngten Bereich 8.5 der Mantelfläche der Linseneinheit 8.0 der Stablinse 8 aufgebracht sind. Am gegenüberliegenden Ende der Stablinse 8, benachbart zum Endbereich 8.4, befindet sich ebenfalls eine Magnetanordnung 8.7, die aus den Segmenten 10, 10' sowie weiteren, in Abbildung 3 nicht erkennbaren Segmenten besteht. Durch die Aufteilung der Magnetanordnungen 8.6, 8.7 in jeweils mehrere Segmente wird das Aufbringen auf den verjüngten Bereich 8.5 ermöglicht bzw. erleichtert. Im Übrigen ist die in Fig. 3 dargestellte Stab linse 8 wie die zu Fig. 2 beschriebene mit einen Stabteil 8.1 und einer dünnen Linse 8.2 aufgebaut, die die Linseneinheit 8.0 bilden.

In Fig. 4 ist ein Teil einer Linsenanordnung 11 eines Endoskops gezeigt, die eine Mehrzahl von aneinander angrenzenden Stablinsen 6, 7, 12, 13 umfasst. Die Stablinsen 6, 7 sind wie zu Fig. 3 beschrieben aufgebaut und bilden ein Umkehrsystem. Die Linseneinheiten der weiteren Stablinsen 12, 13 sind jeweils einstückig lediglich aus einem bikonvexen Stabteil ausgebildet, im Übrigen aber genauso wie zu Fig. 3 beschrieben aufgebaut. Die Stablinsen 12, 13 sind Teile von in Fig. 4 nicht vollständig dargestellten weiteren Umkehrsystemen. Wie in Fig. 4 ersichtlich, kann das Stablinsensystem insgesamt symmetrisch bezüglich einer Mittelebene aufgebaut sein. Dabei sind, wie zu den Stablinsen 6, 7 oben beschrieben, die weiteren Stablinsen 12, 13 jeweils zu den an sie angrenzenden Stablinsen 6, 7 durch magnetische Abstoßungskräfte auf Abstand gehalten; dies gilt in entsprechender Weise für weitere, in Fig. 4 nicht dargestellte Stablinsen der Linsenanordnung 11.

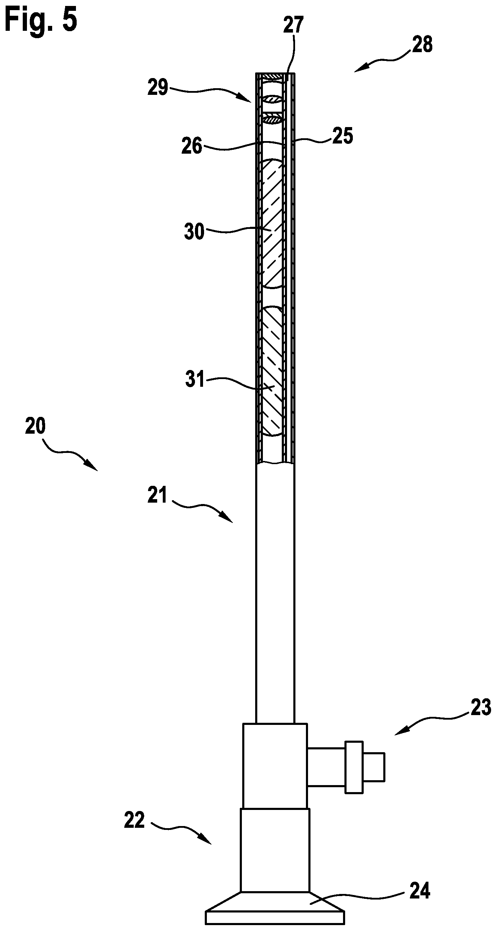

In Fig. 5 ist beispielhaft ein starres Endoskop 20 mit Stablinsen gemäß den vorstehend beschriebenen Ausführungsbeispielen schematisch dargestellt. Das Endoskop 20 umfasst einen langerstreckten, zur Einführung in einen körperinneren Hohlraum ausgebildeten Endoskopschaft 21 und einen am proximalen Ende des Endoskopschafts 21 angeordneten Endoskopkopf 22, der einen Lichtanschluss 23 und ein Okular mit einer Okularmuschel 24 aufweist. Innerhalb des Außenrohrs 25 des Endoskopschafts 21 sind das Optikrohr 26 sowie Lichtleiter 27 zur Übertragung des am Lichtanschluss 23 eingekoppelten Beleuchtungslichts zum distalen Endbereich 28 des Endoskops 20 angeordnet. Im Innenraum des Optikrohrs 26 sind eine Objektivlinsenanordnung 29 sowie Stablinsen 30, 31, die zur Weiterleitung des von der Objektivlinsenanordnung 29 entworfenen endoskopischen Bilds vom distalen Endbereich 28 zum proximalen Endbereich des Endoskops 20 dienen, aufgenommen. Die Stablinsen 30, 31 sind wie zu Fig. 1 bis 4 beschrieben aufgebaut und in Fig. 5 nicht in Einzelheiten dargestellt, wobei die Luftspalte zwischen den Stablinsen 30, 31 und in Fig. 5 nicht gezeigten weiteren Stablinsen zur Verdeutlichung vergrößert dargestellt sind.

Der Übersichtlichkeit halber sind nicht in allen Figuren alle Bezugszeichen dargestellt. Zu einer Figur nicht erläuterte Bezugszeichen haben die gleiche Bedeutung wie in den übrigen Figuren.

### Bezugszeichenliste

- 1: Umkehrsystem
- 2: Stablinse
- 2.0: Linseneinheit
- 2.1: Stabteil
- 2.2: Linse
- 2.3: Mantelfläche
- 2.4: Ringmagnet
- 2.5: Stirnfläche
- 2.6: Magnetanordnung
- 3: Stablinse
- 3.0: Linseneinheit
- 3.1: Stabteil
- 3.2: Linse
- 3.3: Mantelfläche
- 3.4: Ringmagnet
- 3.5: Stirnfläche
- 3.6: Magnetanordnung
- 4: Optische Achse
- 5: Umkehrsystem
- 6: Stablinse
- 6.0: Linseneinheit
- 6.1: Stabteil
- 6.2: Linse
- 6.3: Endbereich
- 6.4: Endbereich
- 6.5: Verjüngter Bereich
- 6.6: Magnetanordnung
- 6.7: Magnetanordnung
- 7: Stablinse
- 7.0: Linseneinheit
- 7.1: Stabteil
- 7.2: Linse
- 7.3: Endbereich
- 7.4: Endbereich
- 7.5: Verjüngter Bereich
- 7.6: Magnetanordnung
- 8: Stablinse
- 8.0: Linseneinheit
- 8.1: Stabteil
- 8.2: Linse
- 8.3: Endbereich
- 8.4: Endbereich
- 8.5: Verjüngter Bereich
- 8.6: Magnetanordnung
- 8.7: Magnetanordnung
- 9, 9', 9", 9"': Segment
- 10, 10': Segment
- 11: Linsenanordnung
- 12: Stablinse
- 13: Stablinse
- 20: Endoskop
- 21: Endoskopschaft
- 22: Endoskopkopf
- 23: Lichtanschluss
- 24: Okularmuschel
- 25: Außenrohr
- 26: Optikrohr
- 27: Lichtleiter
- 28: Distaler Endbereich
- 29: Objektivlinsenanordnung
- 30: Stablinse
- 31: Stablinse

## Patentansprüche

1. Umkehrsystem für ein starres Endoskop umfassend zwei Stablinsen, wobei
jede der Stablinsen, eine stabförmige Linseneinheit (2.0, 3.0, 6.0, 7.0, 8.0) aus einem stabförmigen Linsenelement oder mehreren miteinander verkitteten Linsenelementen umfasst, **dadurch gekennzeichnet, dass** die Linseneinheit (2.0, 3.0, 6.0, 7.0, 8.0) auf ihrer Umfangsfläche mindestens eine axial magnetisierte Magnetanordnung (2.6, 3.6, 6.6, 6.7, 7.6, 8.6, 8.7) aufweist, wobei
sich bei dem Umkehrsystem zwei gleiche Pole gegenüberstehen.

2. Umkehrsystem nach Anspruch 1, **dadurch gekennzeichnet, dass** die Magnetanordnung (2.6, 3.6, 6.6, 6.7, 7.6, 8.6, 8.7) auf die Umfangsfläche aufgeklebt ist.

3. Umkehrsystem nach Anspruch 1 oder 2, **dadurch gekennzeichnet, dass** die Magnetanordnung (2.6, 3.6, 6.6, 6.7, 7.6, 8.6, 8.7) auf einem axialen Endbereich (8.3, 8.4) der Umfangsfläche angeordnet ist.

4. Umkehrsystem nach einem der vorhergehenden Ansprüche, **dadurch gekennzeichnet, dass** die Magnetanordnung (2.6, 3.6) durch einen Ringmagnet (2.4, 3.4) gebildet ist.

5. Umkehrsystem nach einem der vorhergehenden Ansprüche, **dadurch gekennzeichnet, dass** die Magnetanordnung (6.6, 6.7, 7.6, 8.6, 8.7) auf einem gegenüber einem Endbereich (6.3, 6.4, 7.3, 7.4, 8.3, 8.4) verjüngten Bereich (6.5, 7.5, 8.5) der Umfangsfläche angeordnet ist.

6. Umkehrsystem nach einem der vorhergehenden Ansprüche, **dadurch gekennzeichnet, dass** die Magnetanordnung (6.6, 6.7, 7.6, 8.6, 8.7) durch eine Mehrzahl von Segmenten (9, 9', 9", 9"', 10, 10') gebildet ist.

7. Umkehrsystem nach einem der vorhergehenden Ansprüche, **dadurch gekennzeichnet, dass** die Stablinse (8, 12, 13, 30, 31) zwei Magnetanordnungen (8.6, 8.7) aufweist, die jeweils auf einem axialen Endbereich (8.3, 8.4) der Umfangsfläche oder auf der Umfangsfläche benachbart zu einem axialen Endbereich (8.3, 8.4) der Umfangsfläche angeordnet sind.

8. Endoskop mit einem Umkehrsystem nach einem der vorhergehenden Ansprüche.

9. Verfahren zum Montieren eines optischen Systems eines Endoskops (20), das eine Linsenanordnung (11) mit mindestens einer ersten und einer benachbart zur ersten angeordneten zweiten Stablinse (2, 3, 6, 7, 8, 30, 31) umfasst, wobei die erste Stablinse (2, 6, 8, 30), die auf einer Umfangsfläche einer Linseneinheit (2.0, 6.0, 8.0) mindestens eine axial magnetisierte Magnetanordnung (6.6, 6.7, 8.6, 8.7) aufweist, in ein Optikrohr (26) des Endoskops (20) eingeschoben wird, die zweite Stablinse (3, 7, 8, 31), die auf einer Umfangsfläche einer Linseneinheit (3.0, 7.0, 8.0) eine axial magnetisierte Magnetanordnung (7.6, 8.6, 8.7) aufweist, in das Optikrohr derart eingeschoben wird, dass die Magnetanordnungen (6.6, 6.7, 7.6, 8.6, 8.7) der ersten und der zweiten Stablinse (2, 3, 6, 7, 8, 30, 31) einander mit gleichen Polen gegenüberstehen, die erste und die zweite Stablinse (2, 3, 6, 7, 8, 30, 31) axial auf Druck belastet werden, so dass sie mit den Scheiteln der Linseneinheiten aneinander anliegen, und die erste und die zweite Stablinse (2, 3, 6, 7, 8, 30, 31) axial entspannt werden, bis zwischen den aneinander anliegenden Scheiteln der Linseneinheiten der ersten und der zweiten Stablinse (2, 3, 6, 7, 8, 30, 31) ein Luftspalt entsteht.

## Claims

1. Inversion system for a rigid endoscope comprising two rod lenses, wherein
each of the rod lenses comprises a rod-shaped lens unit (2.0, 3.0, 6.0, 7.0, 8.0) composed of a rod-shaped lens element or a plurality of lens elements cemented to one another, **characterized in that**, on its circumferential face, the lens unit (2.0, 3.0, 6.0, 7.0, 8.0) has at least one axially magnetized magnet arrangement (2.6, 3.6, 6.6, 6.7, 7.6, 8.6, 8.7), wherein
two identical poles lie opposite each other in the inversion system.

2. Inversion system according to Claim 1, **characterized in that** the magnet arrangement (2.6, 3.6, 6.6, 6.7, 7.6, 8.6, 8.7) is adhesively bonded to the circumferential face.

3. Inversion system according to Claim 1 or 2, **characterized in that** the magnet arrangement (2.6, 3.6, 6.6, 6.7, 7.6, 8.6, 8.7) is arranged on an axial end region (8.3, 8.4) of the circumferential face.

4. Inversion system according to one of the preceding claims, **characterized in that** the magnet arrangement (2.6, 3.6) is formed by a ring magnet (2.4, 3.4).

5. Inversion system according to one of the preceding claims, **characterized in that** the magnet arrangement (6.6, 6.7, 7.6, 8.6, 8.7) is arranged on a region (6.5, 7.5, 8.5) of the circumferential face that is tapered in relation to an end region (6.3, 6.4, 7.3, 7.4, 8.3, 8.4).

6. Inversion system according to one of the preceding claims, **characterized in that** the magnet arrangement (6.6, 6.7, 7.6, 8.6, 8.7) is formed by a plurality of segments (9, 9', 9", 9"', 10, 10').

7. Inversion system according to one of the preceding claims, **characterized in that** the rod lens (8, 12, 13, 30, 31) has two magnet arrangements (8.6, 8.7) which are each arranged on an axial end region (8.3, 8.4) of the circumferential face or on the circumferential face adjacent to an axial end region (8.3, 8.4) of the circumferential face.

8. Endoscope having an inversion system according to one of the preceding claims.

9. Method for mounting an optical system of an endoscope (20) comprising a lens arrangement (11) with at least a first rod lens (2, 6, 8, 30) and, arranged adjacent to the latter, a second rod lens (3, 7, 8, 31), wherein the first rod lens (2, 6, 8, 30), which has at least one axially magnetized magnet arrangement (6.6, 6.7, 8.6, 8.7) on a circumferential face of a lens unit (2.0, 6.0, 8.0), is inserted into an optics tube (26) of the endoscope (20), the second rod lens (3, 7, 8, 31), which has an axially magnetized magnet arrangement (7.6, 8.6, 8.7) on a circumferential face of a lens unit (3.0, 7.0, 8.0), is inserted into the optics tube in such a way that the magnet arrangements (6.6, 6.7, 7.6, 8.6, 8.7) of the first and the second rod lenses (2, 3, 6, 7, 8, 30, 31) lie opposite each other with the same poles, the first and the second rod lenses (2, 3, 6, 7, 8, 30, 31) are axially loaded with pressure in such a way that they bear on each other with the vertices of the lens units, and the first and the second rod lenses (2, 3, 6, 7, 8, 30, 31) are axially relaxed until an air gap forms between the touching vertices of the lens units of the first and the second rod lenses (2, 3, 6, 7, 8, 30, 31).

## Revendications

1. Système de retournement pour un endoscope rigide, comprenant deux lentilles en barreau,
chacune des lentilles en barreau comportant une unité de lentille (2.0, 3.0, 6.0, 7.0, 8.0) en forme de barreau composée d'un élément de lentille en forme de barreau ou de plusieurs éléments de lentille cimentés les uns aux autres, **caractérisé en ce que** l'unité de lentille (2.0, 3.0, 6.0, 7.0, 8.0) possède sur sa surface périphérique au moins un arrangement d'aimants (2.6, 3.6, 6.6, 6.7, 7.6, 8.6, 8.7) à magnétisation axiale,
deux pôles identiques se faisant mutuellement face avec le système de retournement.

2. Système de retournement selon la revendication 1, **caractérisé en ce que** l'arrangement d'aimants (2.6, 3.6, 6.6, 6.7, 7.6, 8.6, 8.7) est collé sur la surface périphérique.

3. Système de retournement selon la revendication 1 ou 2, **caractérisé en ce que** l'arrangement d'aimants (2.6, 3.6, 6.6, 6.7, 7.6, 8.6, 8.7) est disposé sur une zone d'extrémité axiale (8.3, 8.4) de la surface périphérique.

4. Système de retournement selon l'une des revendications précédentes, **caractérisé en ce que** l'arrangement d'aimants (2.6, 3.6) est formé par un aimant annulaire (2.4, 3.4).

5. Système de retournement selon l'une des revendications précédentes, **caractérisé en ce que** l'arrangement d'aimants (6.6, 6.7, 7.6, 8.6, 8.7) est disposé sur une zone (6.5, 7.5, 8.5) de la surface périphérique effilée par rapport à une zone d'extrémité (6.3, 6.4, 7.3, 7.4, 8.3, 8.4).

6. Système de retournement selon l'une des revendications précédentes, **caractérisé en ce que** l'arrangement d'aimants (6.6, 6.7, 7.6, 8.6, 8.7) est formé par une pluralité de segments (9, 9', 9", 9"', 10, 10').

7. Système de retournement selon l'une des revendications précédentes, **caractérisé en ce que** la lentille en barreau (8, 12, 13, 30, 31) possède deux arrangements d'aimants (8.6, 8.7) qui sont respectivement disposés sur une zone d'extrémité axiale (8.3, 8.4) de la surface périphérique ou sur la surface périphérique adjacentes à une zone d'extrémité axiale (8.3, 8.4) de la surface périphérique.

8. Endoscope comprenant un système de retournement selon l'une des revendications précédentes.

9. Procédé de montage d'un système optique d'un endoscope (20), lequel comporte un arrangement de lentilles (11) comprenant au moins une première et une deuxième lentille en barreau (2, 3, 6, 7, 8, 30, 31) disposée adjacente à la première, la première lentille en barreau (2, 6, 8, 30), laquelle possède sur une surface périphérique d'une unité de lentille (2.0, 6.0, 8.0) au moins un arrangement d'aimants (6.6, 6.7, 8.6, 8.7) à magnétisation axiale, étant enfilée dans un tube optique (26) de l'endoscope (20), la deuxième lentille en barreau (3, 7, 8, 31), laquelle possède sur une surface périphérique d'une unité de lentille (3.0, 7.0, 8.0) un arrangement d'aimants (7.6, 8.6, 8.7) à magnétisation axiale, étant enfilée dans le tube optique de telle sorte que les arrangements d'aimants (6.6, 6.7, 7.6, 8.6, 8.7) des première et deuxième lentilles en barreau (2, 3, 6, 7, 8, 30, 31) se font face les uns aux autres avec les mêmes pôles, les première et deuxième lentilles en barreau (2, 3, 6, 7, 8, 30, 31) sont soumises à une contrainte de pression axiale de telle sorte qu'elles reposent les unes contre les autres par les sommets des unités de lentille et les première et deuxième lentilles en barreau (2, 3, 6, 7, 8, 30, 31) sont détendues dans le sens axial jusqu'à ce qu'une lame d'air se forme entre les sommets des unités de lentille reposant les uns contre les autres des première et deuxième lentilles en barreau (2, 3, 6, 7, 8, 30, 31).
